# EUROPÄISCHE PATENTSCHRIFT

(11) **EP 1 640 578 B1**
(45) Veröffentlichungstag und Bekanntmachung des Hinweises auf die Patenterteilung: **07.11.2007**
(21) Anmeldenummer: 05106878.1
(22) Anmeldetag: 26.07.2005
(51) Int. Cl.: F01N 3/20

(54) **Verfahren zum Betreiben einer Brennkraftmaschine und Vorrichtung zur Durchführung des Verfahrens**
Method for the operation of an internal-combustion engine and a device for the execution of this method
Procédé pour faire fonctionner un moteur à combustion interne et un dispositif pour la mise en oeuvre de ce procédé

(30) Priorität: 25.09.2004 DE 102004046639
(43) Veröffentlichungstag der Anmeldung: 29.03.2006
(73) Patentinhaber: ROBERT BOSCH GMBH, 70442 Stuttgart (DE)
(72) Erfinder: Wickert, Stefan, 73095, Albershausen (DE); Handler, Torsten, 70435, Stuttgart (DE); Samuelsen, Dirk, 71636, Ludwigsburg (DE); Walz, Christian, 76448, Durmersheim (DE)

(56) Entgegenhaltungen:
- EP-A- 0 820 799
- WO-A-99/43420
- US-A1- 2003 216 855
- US-A1- 2004 098 974
- US-B2- 6 546 720

## Beschreibung

### Stand der Technik

Die Erfindung geht aus von einem Verfahren zum Betreiben einer Brennkraftmaschine, in deren Abgasbereich wenigstens ein Katalysator und ein NOx-Sensor angeordnet sind, und einer Vorrichtung zur Durchführung des Verfahrens nach der Gattung der unabhängigen Ansprüche.

In der DE 199 03 439 A1 werden ein Verfahren und eine Vorrichtung zum Betreiben einer Brennkraftmaschine beschrieben, in deren Abgasbereich ein SCR-Katalysator (Selective-Catalytic-Reduction) angeordnet ist, der die im Abgas der Brennkraftmaschine enthaltenen Stickoxide mit einem Reagenzmittel zu Stickstoff reduziert. Die Dosierung des Reagenzmittels erfolgt vorzugsweise in Abhängigkeit von Betriebskenngrößen der Brennkraftmaschine, wie beispielsweise der Drehzahl und der eingespritzten Kraftstoff menge. Weiterhin erfolgt die Dosierung vorzugsweise in Abhängigkeit von Abgas-Betriebskenngrößen, wie beispielsweise der Abgastemperatur oder der Betriebstemperatur des SCR-Katalysators.

Als Reagenzmittel ist beispielsweise das Reduktionsmittel Ammoniak vorgesehen, das aus einer Harnstoff-Wasser-Lösung gewonnen werden kann. Die Dosierung des Reagenzmittels oder von Ausgangsstoffen des Reagenzmittels muss sorgfältig festgelegt werden. Eine zu geringe Dosierung hat zur Folge, dass Stickoxide im SCR-Katalysator nicht mehr vollständig reduziert werden können. Eine zu hohe Dosierung führt zu einem Reagenzmittelschlupf, der einerseits zu einem unnötig hohen Reagenzmittelverbrauch und andererseits, in Abhängigkeit von der Beschaffenheit des Reagenzmittels, zu einer unangenehmen Geruchsbelästigung führen kann. Weiterhin muss berücksichtigt werden, dass Ammoniak giftig ist.

In der DE 197 39 848 A1 ist eine Vorgehensweise beschrieben, mit welcher die NOx-Rohemissionen der Brennkraftmaschine aus bekannten Betriebskenngrößen der Brennkraftmaschine wenigstens näherungsweise berechnet werden können. Ausgangspunkt ist ein Kennfeld, das von der Drehzahl und dem Drehmoment der Brennkraftmaschine aufgespannt wird. Zusätzlich können Korrekturen, beispielsweise in Abhängigkeit von der Luftzahl Lambda, vorgesehen sein.

Aus der DE 10 2004 031 624 (nicht vorveröffentlicht) ist ein Verfahren zum Betreiben eines zur Reinigung des Abgases einer Brennkraftmaschine verwendeten SCR-Katalysators beschrieben, bei dem eine Steuerung oder Regelung des Reagenzmittel-Füllstands im SCR-Katalysator auf einen vorgegebenen Speichersollwert vorgesehen ist. Die gezielte Vorgabe des Speichersollwerts stellt einerseits sicher, dass in instationären Zuständen der Brennkraftmaschine eine ausreichende Reagenzmittelmenge zur möglichst vollständigen Beseitigung der NOx-Rohemissionen der Brennkraftmaschine zur Verfügung steht und dass andererseits ein Reagenzmittelschlupf vermieden wird.

Der Reagenzmittel-Füllstand des SCR-Katalysators wird anhand eines Katalysatormodells ermittelt, das den in den SCR-Katalysator einströmenden NOx-Massenstrom, den den SCR-Katalysator verlassenden NOx-Massenstrom, die Katalysatortemperatur sowie gegebenenfalls den Reagenzmittelschlupf berücksichtigt. Der maximal mögliche Reagenzmittel-Füllstand des SCR-Katalysators hängt insbesondere von der Betriebstemperatur des SCR-Katalysators ab. Der maximal mögliche Reagenzmittel-Füllstand ist bei geringen Betriebstemperaturen am höchsten und fällt mit zunehmender Betriebstemperatur zu kleineren Werten ab. Der Wirkungsgrad des SCR-Katalysators hängt von der katalytischen Aktivität ab, die bei geringen Betriebstemperaturen ebenfalls gering ist, mit steigender Betriebstemperatur ein Maximum durchläuft und mit weiter zunehmender Betriebstemperatur wieder absinkt.

In der DE 199 60 731 C2 ist ein NOx-Sensor beschrieben, der die in einem Abgasstrom einer Brennkraftmaschine vorliegende NOx-Konzentration erfasst. Die zum Betreiben des NOx-Sensors vorgesehene Schaltungsanordnung ermöglicht eine Einstellung der Potenziale mit einem relativ zueinander sehr kleinen Offset.

In der DE 199 62 912 C2 ist ebenfalls ein NOx-Sensor zum Erfassen der in einem Abgasstrom vorliegenden NOx-Konzentration beschrieben. Eine Schaltungsanordnung verändert in Abhängigkeit von den in den Elektroden-Zuleitungen oder den zwischen den Elektroden fließenden Strömen die bereitgestellten Spannungen derart, dass die an den Elektroden im Innern des Sensors anliegenden Spannungen die vorgegebenen Sollwerte aufweisen.

Die beschriebenen NOx-Sensoren weisen mehrere Kammern auf, die über die Diffusions-Barrieren miteinander in Verbindung stehen. Die O2-Konzentration wird in der ersten Kammer durch eine erste elektrolytische Sauerstoff-Pumpzelle auf einen vorbestimmten Wert verringert. Die Bedingungen in der ersten Kammer, wie Temperatur, katalytische Wirkung des Elektrodenmaterials sowie Pumpspannung, werden dabei derart gewählt, dass eine Zersetzung des NOx in . N2 und 02 nicht auftritt. In der zweiten Kammer wird ebenfalls 02 abgepumpt. In der zweiten Kammer wird an einer zweiten Pumpelektrode bis zu einer sehr geringen 02-Konzentration nochmals 02 abgepumpt. Hierdurch wird eine Reduktionsreaktion des NOx begünstigt. An einer dritten Pumpelektrode wird dann elektrochemisch reduziert. Die Stärke des Pumpstroms an der dritten Elektrode in der zweiten Kammer kann somit als Maß für die NOx-Konzentration im Abgas herangezogen werden. Eine dritte Kammer ist mit der Umgebungsluft verbunden und enthält eine Luftreferenzelektrode. Die bekannten amperometrischen Doppelkammer-NOx-Sensoren weisen aufgrund des Messprinzips eine Querempfindlichkeit gegenüber Ammoniak (NH3) auf. Das im Abgas enthaltene Ammoniak als ein Beispiel eines Reagenzmittels führt über die Reaktion 4 NH3 + 5 02 → 4 NO + 6 H2O zu einer Verfälschung des Sensorsignals.

In der WO 99/43420 ist das Betreiben eines NOx-Speicherkatalysators anhand eines von einem stromabwärts nach dem NOx-Speicherkatalysator angeordneten NOx-Sensors bereitgestellten Sensorsignals beschrieben, wobei der NOx-Sensor eine Querempfindlichkeit gegenüber einem zur Regeneration des NOx-Speicherkatalysators verwendeten Reagenzmittel aufweist.

Die Regeneration des NOx-Speicherkatalysators erfolgt anhand von Kennfeldern und Tabellen, die in einem Steuergerät hinterlegt sind. In periodischen Abständen wird die Regeneration des NOx-Speicherkatalysators alternativ allein in Abhängigkeit von dem vom NOx-Sensor bereitgestellten Sensorsignal vorgenommen. Hieraus können Erkenntnisse einerseits zum Korrigieren der hinterlegten Kennfelder und Tabellen und andererseits zum Ermitteln des Alterungszustands des NOx-Speicherkatalysators gewonnen werden.

Ein Zyklus, bei welchem die Regenerationssteuerung in Abhängigkeit ausschließlich vom Sensorsignal vorgesehen ist, startet damit, dass der Motor in einem mageren Betriebszustand betrieben wird, in welchem erhebliche NOx-Rohemissionen auftreten, die im NOx-Speicherkafalysator eingelagert werden. Falls das vom NOx-Sensor bereitgestellte Sensorsignal einen Schwellenwert überschreitet, wird die Regeneration des NOx-Speicherkatalysators eingeleitet. Die Regeneration wird beendet, wenn das Sensorsignal erneut einen Schwellenwert überschreitet, wobei hierbei davon ausgegangen wird, dass es sich um einen Reagenzmittelschlupf handelt.

In der US 2004/0098974 A1 wird zur Abgasreinigung ein SCR-Katalysator eingesetzt, der mit einem Reagenzmittel beaufschlagt wird, welches eine katalytische Reaktion zur NOx-Konvertierung unterstützt. Das Dokument geht insbesondere auf eine Schätzung des Reagenzmittel-Füllstands im SCR-Katalysator ein. Erwähnt ist, dass ein stromabwärts nach dem SCR-Katalysator angeordneter NOx-Sensor eine Querempfindlichkeit gegenüber dem Reagenzmittel Ammoniak aufweist. Allerdings werden keine Maßnahmen getroffen, die eine Unterscheidung zwischen einem Sensorsignal, welches die NOx-Konzentration und einem Sensorsignal, welches die einem Reagenzmittelschlupf entsprechende Reagenzmittel-Konzentration widerspiegelt, ermöglichen würde.

Der Erfindung liegt die Aufgabe zugrunde, ein Verfahren zum Betreiben einer Brennkraftmaschine, in deren Abgasbereich wenigstens ein Katalysator und ein NOx-Sensor angeordnet sind, und eine Vorrichtung zur Durchführung des Verfahrens anzugeben, bei denen ein möglichst geringer Reagenzmittelschlupf eines im Katalysator benötigten Reagenzmittels auftritt.

Die Aufgabe wird durch die in den unabhängigen Ansprüchen angegebenen Merkmale jeweils gelöst.

### Vorteile der Erfindung

Das erfindungsgemäße Verfahren geht von wenigstens einem im Abgasbereich der Brennkraftmaschine angeordneten Katalysator und wenigstens einem stromabwärts des Katalysators angeordneten NOx-Sensor aus. Der NOx-Sensor weist eine Querempfindlichkeit gegenüber einem Reagenzmittel auf, das im Katalysator benötigt wird. Erfindungsgemäß ist vorgesehen, dass in vorgegebenen Betriebszuständen der Brennkraftmaschine ein Auswahlsignal bereitgestellt wird, bei dessen Auftreten das vom NOx-Sensor bereitgestellte Sensorsignal wenigstens als ein Maß für die hinter dem Katalysator auftretende Reagenzmittel-Konzentration bewertet wird, die im Folgenden als Reagenzmittelschlupf bezeichnet wird.

Das erfindungsgemäße Verfahren ermöglicht es, die an sich unerwünschte Querempfindlichkeit eines NOx-Sensors auszunutzen. Die Auswahl von vorgegebenen Betriebszuständen der Brennkraftmaschine erfolgt vorzugsweise unter dem Gesichtspunkt, dass die Brennkraftmaschine dort möglichst geringe oder überhaupt keine NOx-Rohemissionen aufweist, sodass das vom NOx-Sensor bereitgestellte Sensorsignal wenigstens näherungsweise nur aufgrund der Querempfindlichkeit auftritt und somit wenigstens näherungsweise ein Maß für den Reagenzmittelschlupf widerspiegelt.

Vorteilhafte Ausgestaltungen und Weiterbildungen des erfindungsgemäßen Verfahrens ergeben sich aus abhängigen Ansprüchen.

Eine Ausgestaltung sieht vor, dass als vorgegebener Betriebszustand der Brennkraftmaschine der Leerlauf vorgesehen wird. Der Leerlauf wird vorzugsweise dadurch erkannt, dass die Brennkraftmaschinen-Drehzahl in einem vorgebbaren Drehzahlbereich und die der Brennkraftmaschine zugeführte Kraftstoffmenge unterhalb eines vorgegebenen Kraftstoffmenge-Schwellenwertes oder innerhalb eines vorgegebenen Bereichs liegen.

Eine Ausgestaltung sieht vor, und dass als vorgegebener Betriebszustand der Brennkraftmaschine ein Schiebebetrieb vorgesehen wird. Der Schiebebetrieb wird vorzugsweise dadurch erkannt, dass die Drehzahl der Brennkraftmaschine oberhalb eines vorgegebenen Drehzahl-Schwellenwerts liegt und dass der Brennkraftmaschine kein Kraftstoff zugeführt wird.

Die Brennkraftmaschinen-Drehzahl und ein Kraftstoffsignal stehen ohnehin zur Verfügung, sodass zusätzliche Sensoren nicht erforderlich sind.

Der Katalysator ist vorzugsweise als SCR-Katalysator ausgebildet, der die NOx-Rohemissionen der Brennkraftmaschine mit einem Reagenzmittel in weniger schädliche Verbindungen konvertiert. Als Reagenzmittel ist beispielsweise Ammoniak vorgesehen. Das Reagenzmittel kann stromaufwärts des Katalysators entweder unmittelbar in den Abgaskanal eingebracht oder innermotorisch bereitgestellt werden. Das beispielsweise vorgesehene Reagenzmittel Ammoniak kann aus einem Ausgangsstoff, wie beispielsweise einer Harnstoff-Wasser-Lösung oder Ammoniumcarbamat, gewonnen werden.

Die erfindungsgemäße Vorrichtung zur Durchführung des Verfahrens betrifft zunächst ein Steuergerät, das zur Durchführung des Verfahrens hergerichtet ist.

Das Steuergerät enthält insbesondere eine Betriebszustands-Erkennung, die bei Vorliegen von vorgegebenen Betriebszuständen der Brennkraftmaschine das Auswahlsignal bereitgestellt, bei dessen Auftreten das vom NOx-Sensor erfasste Sensorsignal wenigstens als ein Maß für den Reagenzmittelschlupf bewertet wird.

Das Steuergerät enthält vorzugsweise einen elektrischen Speicher, in welchem die Verfahrensschritte als Computerprogramm abgelegt sind.

Weitere Ausgestaltungen und Weiterbildungen der erfindungsgemäßen Vorgehensweise ergeben sich aus weiteren abhängigen Ansprüchen und aus der folgenden Beschreibung.

### Zeichnung

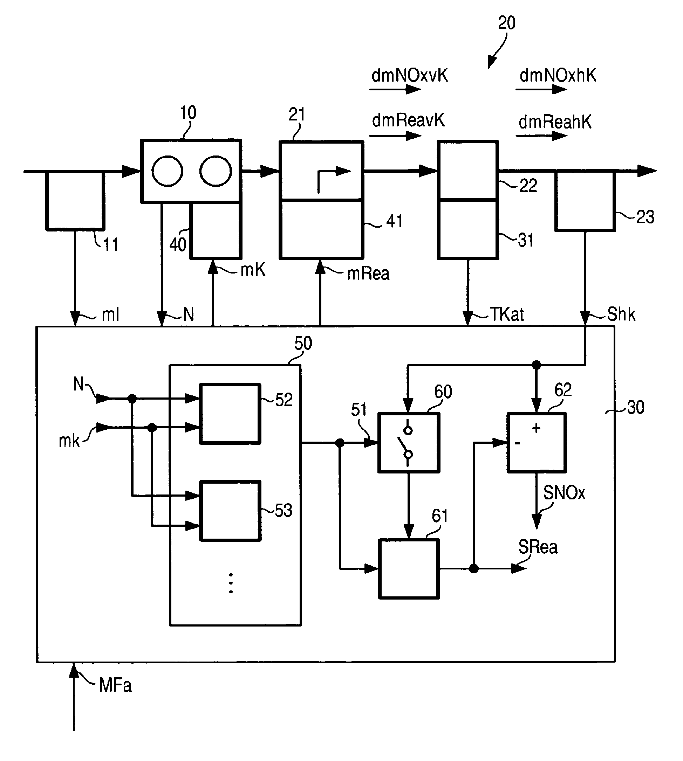

Die Figur zeigt ein technisches Umfeld, in welchem ein erfindungsgemäßes Verfahren abläuft.

Die Figur zeigt eine Brennkraftmaschine 10, in deren Ansaugbereich ein Luftsensor 11 und in deren Abgasbereich 20 eine Reagenzmittel-Einbringvorrichtung 21, ein Katalysator 22 sowie ein NOx-Sensor 23 angeordnet sind.

Vor dem Katalysator 22 treten NOx-Rohemissionen dmNOxvK der Brennkraftmaschine 10 sowie ein Reagenzmittelstrom dmReavK auf. Stromabwärts des Katalysators 22 tritt eine NOx-Konzentration dmNOxhK hinter dem Katalysator 22 sowie ein Reagenzmittelschlupf dmReahK auf.

Der Luftsensor 11 stellt einer Steuerung 30 ein Luftsignal ml, die Brennkraftmaschine 10 eine Drehzahl N, ein dem Katalysator 22 zugeordneter Temperatursensor 31 eine Katalysatortemperatur TKat, der NOx-Sensor 23 ein Sensorsignal ShK und ein nicht näher gezeigtes Fahrpedal eines ebenfalls nicht näher gezeigten Kraftfahrzeugs ein Drehmoment-Sollwert MFa zur Verfügung.

Die Steuerung 30 gibt ein Kraftstoffsignal mK an eine der Brennkraftmaschine 10 zugeordnete Kraftstoff-Zumessvorrichtung 40 sowie ein Reagenzmittelsignal mRea an ein der Reagenzmittel-Einbringvorrichtung 21 zugeordnetes Dosierventil 41 ab.

Die Steuerung 30 enthält eine Betriebszustands-Erkennung 50, der die Drehzahl N und das Kraftstoffsignal mK zugeführt werden. Die Betriebszustands-Erkennung 50, die eine Schiebebetrieb-Erkennung 52 sowie eine Leerlauf-Erkennung 53 enthält, stellt ein Auswahlsignal 51 bereit.

Das Auswahlsignal 51 wird sowohl an einen Schalter 60 als auch an einen Speicher 61 abgegeben. Der Schalter 60 verbindet das Sensorsignal ShK mit dem Speicher 61, der das Reagenzmittelschlupf-Signal SRea bereitstellt, das einem Addierer 62 zur Verfügung gestellt wird.

Der Addierer 62 subtrahiert das Reagenzmittelschlupf-Signal SRea vom Sensorsignal ShK und stellt ein NOx-Signal SNOx bereit.

Die in der Figur gezeigte Anordnung arbeitet folgendermaßen:

Die Steuerung 30 legt das Kraftstoffsignal mK in Abhängigkeit vom Drehmoment-Sollwert MFa und vorzugsweise weiterhin in Abhängigkeit vom Luftsignal ml und/oder der Drehzahl N fest. Der Drehmoment-Sollwert MFa entspricht im wesentlichen dem Wunsch eines Fahrers eines nicht näher gezeigten Kraftfahrzeugs, in welchem die Brennkraftmaschine 10 als Antriebsmotor eingesetzt wird.

In Abhängigkeit vom Betriebszustand der Brennkraftmaschine 10 entstehen mehr oder weniger hohe NOx-Rohemissionen dmNOxvK, die der Katalysator 22 möglichst vollständig beseitigen soll. Der Katalysator 22 ist vorzugsweise als SCR-Katalysator ausgestaltet, der eine Reaktion des NOx mit einem Reagenzmittel unterstützt, das mit der Reagenzmittel-Einbringvorrichtung 21 entweder in den Abgasbereich 20 eindosiert oder gegebenenfalls innermotorisch bereitgestellt wird. Neben dem Katalysator 22 können weitere nicht gezeigte Katalysatoren oder und/oder ein Partikelfilter im Abgasbereich 20 angeordnet sein.

Anstelle des Reagenzmittels kann ein Ausgangsstoff vorgesehen sein. Im Fall des Reagenzmittels Ammoniak kann anstelle des Ammoniaks als Ausgangsstoff beispielsweise eine Harnstoff-Wasser-Lösung oder beispielsweise Ammoniumcarbamat vorgesehen sein.

Die Reagenzmittelmenge bzw. der Reagenzmittelstrom wird bei der Einbringung in den Abgasbereich 20 vom Dosierventil 41 festgelegt, das mit einem nicht näher gezeigten Vorratsbehälter verbunden ist. Die Steuerung 30 legt mit dem Dosiersignal mRea beispielsweise den Öffnungsquerschnitt des Dosierventils 41 fest.

Die Dosierung des Reagenzmittels mit dem Dosiersignal mRea wird beispielsweise anhand der NOx-Rohemissionen dmNOxvK der Brennkraftmaschine 10 und gegebenenfalls in Abhängigkeit von der Temperatur des SCR-Katalysators 22 festgelegt. Die NOx-Rohemissionen dmNOxvK der Brennkraftmaschine 10 hängen vom Betriebspunkt der Brennkraftmaschine 10 ab, der zumindest durch das Drehmoment der Brennkraftmaschine 10 gegeben ist, das weitgehend dem Kraftstoffsignal mK entspricht. Vorzugsweise wird hierbei weiterhin die Drehzahl N berücksichtigt. Die Einbindung der Katalysatortemperatur TKat berücksichtigt die temperaturabhängige Reagenzmittel-Speicherfähigkeit des SCR-Katalysators 22.

Zur Temperaturerfassung ist der Temperatursensor 31 vorgesehen, der stromaufwärts vor dem SCR-Katalysator 22, unmittelbar am SCR-Katalysator 14 oder stromabwärts hinter dem SCR-Katalysator 22 angeordnet sein kann. Wesentlich ist hierbei, dass das vom Temperatursensor 31 bereitgestellte Signal wenigstens ein Maß der Katalysatortemperatur TKat widerspiegelt. Anstelle einer Temperaturmessung kann auch eine Abschätzung der Katalysatortemperatur TKat vorgesehen sein.

In Abhängigkeit von den NOx-Rohemissionen dmNOxvK, dem Reagenzmittelstrom dmReavK vor dem SCR-Katalysator 22 sowie den Betriebsbedingungen des SCR-Katalysators 22 können die NOx-Konzentration dmNOxhK sowie der Reagenzmittelschlupf dmReahK hinter dem SCR-Katalysator 22 auftreten. Beide Abgas-Komponenten sind unerwünscht. Eine hohe Dosierung des Reagenzmittels minimiert die NOx-Konzentration dmNOxhK. In Abhängigkeit vom aktuell vorliegenden Reagenzmittel-Speichervermögen im gegebenen Betriebspunkt des SCR-Katalysators 22 kann hierbei der Reagenzmittelschlupf dmReahK nicht vollständig ausgeschlossen werden. Anhand einer Messung des Reagenzmittelschlupfs dmReahK kann die Dosierung des Reagenzmittels optimal eingestellt werden.

Die Erfassung des Reagenzmittelschlupfs dmReahK ist prinzipiell mit einem speziellen Reagenzmittel-Sensor möglich. Um die Kosten in einer Serienproduktion gering zu halten, ist ein zusätzlicher Sensor unerwünscht. Die erfindungsgemäße Vorgehensweise macht sich zunutze, dass die im eingangs genannten Stand der Technik beschriebenen NOx-Sensoren eine Querempfindlichkeit gegenüber dem Reagenzmittel aufweisen. Die Ursache der Querempfindlichkeit wurde bereits eingangs beschrieben. Die Querempfindlichkeit wird durch das Betreiben des NOx-Sensors 23 bei erhöhten Temperaturen durch die Beheizung der katalytisch aktiven Oberflächen der Edelmetall-Elektroden noch weiter unterstützt. Die Umwandlung des Ammoniaks mit Sauerstoff in Stickstoffmonoxid und Wasser führt zu einer Erhöhung der NOx-Anteile im NOx-Sensor 23, sodass das Sensorsignal ShK des NOx-Sensors 23 die Summe der NOx-Konzentration dmNOxhK und des Reagenzmittelschlupfs dmReahK widerspiegelt.

Die erfindungsgemäße Vorgehensweise sieht die Ermittlung von Betriebszuständen der Brennkraftmaschine 10 vor, in denen die Brennkraftmaschine 10 möglichst geringe NOx-Rohemissionen dmNOxvK aufweist. In diesen Betriebszuständen spiegelt das Sensorsignal ShK durch Wegfall der NOx-Konzentration dmNOxhK weitgehend den Reagenzmittelschlupf dmReahK wider.

Zur Ermittlung der bestimmten Betriebszustände der Brennkraftmaschine 10 ist die Betriebszustands-Erkennung 50 vorgesehen, der beispielsweise die Drehzahl N und das Kraftstoffsignal mK zur Verfügung gestellt werden. Geeignete Betriebszustände, bei denen eine geringe oder überhaupt keine NOx-Rohemissionen dmNOxvK auftreten, sind der Leerlauf der Brennkraftmaschine 10 sowie insbesondere der Schiebebetrieb.

Zur Erkennung des Schiebebetriebs ist die Schiebebetrieb-Erkennung 52 vorgesehen, die den Schiebebetrieb der Brennkraftmaschine 10 daran erkennt, dass die Drehzahl N einen vorgegebenen unteren Drehzahl-Grenzwert überschreitet und das Kraftstoffsignal mK gleich null ist. Zur Erkennung des Leerlaufs der Brennkraftmaschine 10 ist die Leerlauf-Erkennung 53 vorgesehen, die den Leerlauf beispielsweise dadurch erkennt, dass die Drehzahl N innerhalb eines vorgegebenen Bereichs und das Kraftstoffsignal mK unterhalb eines vorgegebenen Kraftstoffsignal-Schwellenwerts liegen. Es kann auch überprüft werden, ob das Kraftstoffsignal mK in einen vorgegebenen Bereich liegt.

Sofern die Betriebszustands-Erkennung 50 einen ausgewählten Betriebszustand der Brennkraftmaschine 10 erkannt hat, stellt die Betriebszustands-Erkennung 50 das Auswahlsignal 51 bereit, welches signalisiert, dass das Sensorsignal ShK des NOx-Sensors 23 wenigstens näherungsweise ausschließlich den Reagenzmittelschlupf dmReahK widerspiegelt.

Das Auswahlsignal 51 wird dem Schalter 60 zur Verfügung gestellt, der das Sensorsignal ShK an seinem Ausgang bereitstellt und an den Speicher 61 weiterleitet. Der Speicher 61 ist vorzugsweise vorgesehen, um das den Reagenzmittelschlupf dmReahK widerspiegelnde Sensorsignal ShK zumindest so lange zu speichern, bis wieder ein geeigneter Betriebszustand vorliegt, bei dem der gespeicherte Wert erneuert werden kann.

Im gezeigten Ausführungsbeispiel stellt der Speicher 61 das Reagenzmittelschlupf-Signal SRea bereit, das bereits am Ausgang des Schalters 60 auftritt, sofern das Auswahlsignal 51 den Schalter 60 geschlossen hat. Das Reagenzmittelschlupf-Signal SRea kann zur Festlegung des Dosiersignals mRea mit herangezogen werden.

Das Reagenzmittelschlupf-Signal SRea kann weiterhin zur wenigstens näherungsweisen Ermittlung der NOx-Konzentration dmNOxhK hinter dem SCR-Katalysator 22 verwendet werden. Sofern die Betriebsbedingungen der Brennkraftmaschine außerhalb der geeigneten Bedingungen liegen, spiegelt das Sensorsignal ShK die Summe der NOx-Konzentration dmNOxhK und des Reagenzmittelschlupfs dmReahK wider. Durch eine Differenzbildung im Addierer 62, der das Reagenzmittelschlupf-Signal SRea vom Sensorsignal ShK subtrahiert, wird das NOx-Signal SNOx erhalten werden, das die NOx-Konzentration dmNOxhK während des gesamten Betriebs der Brennkraftmaschine 10 wenigstens näherungsweise widerspiegelt.

Das NOx-Signal SNOx kann ebenfalls zusätzlich zur Festlegung des Dosiersignals mRea, beispielsweise im Rahmen einer Regelung des Reagenzmittel-Füllstands im SCR-Katalysator 22, herangezogen werden, die im eingangs genannten Stand der Technik näher beschrieben ist.

## Patentansprüche

1. Verfahren zum Betreiben einer Brennkraftmaschine (10), in deren Abgasbereich (20) wenigstens ein SCR-Katalysator (22), welcher die NOx-Rohemissionen (dmNOxvK) der Brennkraftmaschine (10) mit einem Reagenzmittel in weniger schädliche Verbindungen konvertiert, und stromabwärts nach dem SCR-Katalysator (22) ein NOx-Sensor (23), der eine Querempfindlichkeit gegenüber dem Reagenzmittel aufweist, angeordnet sind, **dadurch gekennzeichnet, dass** in Abhängigkeit von Betriebszuständen der Brennkraftmaschine (10), in welchen möglichst geringe NOx-Rohemissionen (dmNOxvK) oder überhaupt keine NOx-Rohemissionen (dmNOxvK) der Brennkraftmaschine (10) auftreten, ein Auswahlsignal (51) bereitgestellt wird, bei dessen Auftreten das vom NOx-Sensor (23) bereitgestellte Sensorsignal (ShK) wenigstens als ein Maß für den Reagenzmittelschlupf (dmReahK) gewertet wird.

2. Verfahren nach Anspruch 1, **dadurch gekennzeichnet, dass** als Betriebszustand der Brennkraftmaschine (10) der Leerlauf vorgesehen wird.

3. Verfahren nach Anspruch 1, **dadurch gekennzeichnet, dass** als Betriebszustand der Brennkraftmaschine (10) ein Schiebebetrieb der Brennkraftmaschine (10) vorgesehen wird.

4. Verfahren nach Anspruch 1, **dadurch gekennzeichnet, dass** bei vorliegendem Auswahlsignal (51) das den Reagenzmittelschlupf (dmReahK) widerspiegelnde Sensorsignal (ShK) in einen Speicher (61) hinterlegt wird.

5. Verfahren nach Anspruch 4, **dadurch gekennzeichnet, dass** das Maß für den Reagenzmittelschlupf (dmReahK) vom Sensorsignal (ShK) zum Erhalt eines Maßes für die gemessene NOx-Konzentration (dmNOxhK) hinter dem Katalysator (22) subtrahiert wird.

6. Verfahren nach Anspruch 1, **dadurch gekennzeichnet, dass** als Reagenzmittel Ammoniak vorgesehen wird.

7. Vorrichtung zur Durchführung des Verfahrens nach einem der vorhergehenden Ansprüche, **dadurch gekennzeichnet, dass** zumindest ein zur Durchführung des Verfahrens hergerichtetes Steuergerät (30) vorgesehen ist.

8. Vorrichtung nach Anspruch 7, **dadurch gekennzeichnet, dass** das Steuergerät (30) eine Betriebszustandserkennung (50) enthält, die in Betriebszuständen der Brennkraftmaschine (10), in welchen möglichst geringe NOx-Rohemissionen (dmNOxvK) oder überhaupt keine NOx-Rohemissionen (dmNOxvK) der Brennkraftmaschine (10) auftreten, das Auswahlsignal (51) bereitstellt, bei dessen Auftreten das vom NOx-Sensor (23) bereitgestellte Sensorsignal (ShK) wenigstens als ein Maß für den Reagenzmittelschlupf (dmReahK) gewertet wird.

## Claims

1. Method for operating an internal combustion engine (10) in whose exhaust gas region (20) are arranged at least one SCR catalytic converter (22), which converts the NOx raw emissions (dmNOxvK) of the internal combustion engine (10) with a reagent into less polluting compounds, and downstream of the SCR catalytic converter (22), a NOx sensor (23) which has cross-sensitivity with respect to the reagent, **characterized in that**, as a function of operating states of the internal combustion engine (10) in which the lowest possible NOx raw emissions (dmNOxvK) or absolutely no NOx raw emissions (dmNOxvK) of the internal combustion engine (10) occur, a selection signal (51) is provided, upon the occurrence of which the sensor signal (ShK) which is provided by the NOx sensor (23) is evaluated at least as a measure for the reagent slip (dmReahK).

2. Method according to Claim 1, **characterized in that** idle is provided as the operating state of the internal combustion engine (10).

3. Method according to Claim 1, **characterized in that** an overrun mode of the internal combustion engine (10) is provided as the operating state of the internal combustion engine (10).

4. Method according to Claim 1, **characterized in that**, when the selection signal (51) is present, the sensor signal (ShK) which reflects the reagent slip (dmReahK) is stored in a memory (61).

5. Method according to Claim 4, **characterized in that** the measure for the reagent slip (dmReahK) is subtracted from the sensor signal (ShK) in order to obtain a measure for the measured NOx concentration (dmNOxhK) downstream of the catalytic converter (22).

6. Method according to Claim 1, **characterized in that** ammonia is provided as the reagent.

7. Device for carrying out the method according to one of the preceding claims, **characterized in that** at least one control unit (30) is provided which is set up for carrying out the method.

8. Device according to Claim 7, **characterized in that** the control unit (30) contains an operating state detection system (50) which, in operating states of the internal combustion engine (10) in which the lowest possible NOx raw emissions (dmNOxvK) or absolutely no NOx raw emissions (dmNOxvK) of the internal combustion engine (10) occur, provides the selection signal (51), upon the occurrence of which the sensor signal (ShK) which is provided by the NOx sensor (23) is evaluated at least as a measure for the reagent slip (dmReahK).

## Revendications

1. Procédé de gestion d'un moteur à combustion (10) dont le système des gaz d'échappement (20) comporte au moins un catalyseur SCR (22) qui convertit les émissions brutes d'oxydes d'azote NOₓ (dmNOxvK) du moteur (10) avec un agent réactif pour former des combinaisons moins nocives et qui en aval du catalyseur SCR (22) comporte un capteur d'oxydes d'azote NOₓ (23) à sensibilité transversale vis-à-vis de l'agent réactif,
**caractérisé en ce que**
selon les états de fonctionnement du moteur à combustion interne (10) avec très peu d'émissions brutes d'oxydes NOₓ (dmNOxvk) ou aucune émission brute d'oxydes NOₓ (dmNOxvk) par le moteur à combustion (10), on fournit un signal de sélection (51) qui, lorsque se produit le signal de capteur (ShK) fourni par le capteur d'oxydes NOₓ (23), est exploité au moins comme une mesure du glissement d'agent réactif (dmReahK).

2. Procédé selon la revendication 1 ,
**caractérisé en ce que**
l'état de fonctionnement du moteur à combustion (10) est le ralenti.

3. Procédé selon la revendication 1,
**caractérisé en ce que**
l'état de fonctionnement du moteur à combustion (10) est le mode de poussée du moteur (10).

4. Procédé selon la revendication 1,
**caractérisé en ce qu'**
en présence du signal de sélection (51), le signal de capteur (ShK) qui traduit le glissement d'agent réactif (dmReahK) est enregistré dans une mémoire (61).

5. Procédé selon la revendication 4,
**caractérisé en ce que**
la mesure du glissement d'agent réactif (dmReahK) est retranchée du signal de capteur (ShK) pour obtenir une mesure de la concentration mesurée d'oxydes NOₓ (dmNOxhK) en aval du catalyseur (22).

6. Procédé selon la revendication 1,
**caractérisé en ce que**
l'agent réactif est de l'ammoniac.

7. Procédé selon l'une des revendications précédentes,
**caractérisé par**
au moins un appareil de commande (30) pour la mise en oeuvre du procédé.

8. Dispositif selon la revendication 7,
**caractérisé en ce que**
l'appareil de commande (30) comporte une reconnaissance d'état de fonctionnement (50) qui fournit le signal de sélection (51) pour les états de fonctionnement du moteur à combustion (10) avec aussi peu que possible d'émissions brutes d'oxydes NOx (dmNOxvK) ou aucune émission brute d'oxydes NOₓ (dmNOxvK) par le moteur à combustion (10), signal de sélection qui lorsqu'il se produit fait exploiter le signal de capteur (ShK) fourni par le capteur d'oxydes NOₓ (23) au moins comme une mesure du glissement d'agent réactif (dmReahK).
